# FASCICULE DE BREVET EUROPEEN

(11) **EP 3 490 747 B1**
(45) Date de publication et mention de la délivrance du brevet: **13.09.2023**
(21) Numéro de dépôt: 17758275.6
(22) Date de dépôt: 21.07.2017
(51) Int. Cl.: B23D 21/04, B26D 1/60, B26D 3/16

(54) **COUTEAU ROTATIF POUR MACHINE DE PRODUCTION D'EMBALLAGES ET PROCEDE UTILISANT LEDIT COUTEAU**
ROTIERENDES SCHNEIDWERKZEUG FÜR MASCHINE ZUR HERSTELLUNG VON VERPACKUNGEN, UND VERFAHREN, BEI DEM DIESES SCHNEIDWERKZEUG ZUM EINSATZ KOMMT
ROTARY KNIFE FOR PACKAGING-PRODUCING MACHINE AND METHOD USING SAID KNIFE

(30) Priorité: 26.07.2016 EP 16181260
(43) Date de publication de la demande: 05.06.2019
(73) Titulaire: Aisapack Holding SA, 1896 Vouvry (CH)
(72) Inventeur: THURRE, Sébastien, 1871 Choëx (CH); STAHL, Christophe, 1807 Blonay (CH); FERRIN, Didier, 1897 Le Bouveret (CH)
(74) Mandataire: Grosfillier, Philippe
(86) Numéro de dépôt international: PCT/IB2017/054432
(87) Numéro de publication internationale: WO 2018/020379

(56) Documents cités:
- CH-A5- 633 742
- FR-A1- 2 972 670
- JP-A- H0 857 799
- JP-A- S6 274 525
- US-A- 3 843 758
- US-A- 5 097 576

## Description

### DOMAINE TECHNIQUE ET ÉTAT DE LA TECHNIQUE

La présente invention concerne un dispositif de coupe de tubes individuels selon le préambule de la revendication 1 et un procédé de coupe de tubes individuels selon la revendication 11. Le document JPH0857799 divulgue un tel dispositif.

De telles machines de production d'emballages, notamment de tubes, sont connues dans l'état de la technique.

Dans de telles machines, lors de la production d'emballages sous forme de tubes, on crée généralement un produit tubulaire continu qu'il est nécessaire de couper à la dimension (longueur) souhaitée pour former l'emballage individuel voulu, comme un tube. Il est donc nécessaire d'intégrer des moyens de coupe dans la machine pour obtenir en sortie de celle-ci des tubes individuels d'une longueur déterminée (en fonction de la destination desdits tubes). Toutefois, la formation du produit tubulaire étant continue et ne s'arrêtant pas pour permettre la coupe de tubes individuels, il est nécessaire de construire un système de coupe qui soit capable de se déplacer en suivant le produit tubulaire à la vitesse de celui-ci et de découper en même temps les tubes individuels dans le produit tubulaire continu sans arrêt de celui-ci.

Des systèmes de coupe de tubes sont connus dans l'état de la technique, par exemple des publications EP 2 085 169, EP 2 008 749, WO 2015/052338, GB 2 120 591 et KR 20120062045 comme arrière-plan technologique.

Par exemple la publication EP 2 085 169 décrit un système de coupe de tuyaux. Plus précisément, le système connu de ce document comprend une table se déplaçant linéairement en coulissant dans le sens de déplacement du produit tubulaire, cette table supportant notamment un bras de coupe avec un outil de coupe, le bras de coupe étant monté sur un axe de pivotement comprenant un pignon d'entraînement, ledit pignon étant actionné par un dispositif d'entraînement pour commander la rotation du bras dans une position de coupe du produit tubulaire en segments de tube. Le système décrit est néanmoins compliqué et comprend de nombreux éléments embarqués sur la table ce lui confère une inertie importante et limite ses accélérations et ralentissement dans le sens linéaire ce qui par voie de conséquence limite la cadence de production de tubes individuels découpés dans le produit tubulaire.

En conséquence, les dispositifs de coupe rotatifs connus sont limités en cadence à cause des sollicitations créées par le mouvement linéaire alternatif qui génère de fortes accélérations. La réduction de la masse embarquée et par conséquent des forces d'inerties est un facteur déterminant pour permettre l'augmentation des cadences de production.

La publication US 3,843,758 décrit un procédé de fabrication de tubes annelés utilisés pour l'irrigation. Le tube formé en continu est amené dans une station de coupe dans laquelle des moyens de coupe sont appliqués et suivent le mouvement du tube. Dans cette publication, on déplace donc l'ensemble des moyens de coupe ce qui n'est pas optimal du point de vue de l'inertie du système à déplacer, accélérer et ralentir, et par voie de conséquence nuit à la cadence de production.

La publication CH 633 742 décrit un dispositif pour découper des tubes utilisant des couteaux circulaires logés librement rotatifs autour de leur axe respectif et entraînés autour du tube à couper. Chaque couteau est logé dans un chariot porte-couteau apte à se déplacer radialement, réuni par une articulation à équerre à un cylindre central pouvant effectuer un mouvement axial sous l'influence d'une pression d'un fluide, à savoir un liquide hydraulique, de sorte que, lorsque le cylindre se déplace axialement les chariots se déplacent radialement. Ce système est néanmoins compliqué et utilise un liquide hydraulique pour son actionnement ce qui peut poser problème, voire être interdit dans certains domaines d'application des tubes produits (par exemple pour des denrées alimentaires et autres produits similaires).

La publication FR 2 972 670 décrit un procédé et un dispositif de réalisation de pièces, comme des pièces de révolution allongées. Le système décrit comprend un portique supportant tout le dispositif d'usinage et de coupe. Ainsi, lors d'un mouvement parallèle à l'axe de rotation du dispositif d'usinage/coupe, c'est-à-dire selon le sens de déplacement du produit usiné, il est nécessaire de déplacer le portique et par conséquent l'ensemble du dispositif d'usinage/coupe. L'inertie est donc maximale ce qui influence sur la cadence de production du dispositif décrit.

### SOMMAIRE DE L'INVENTION

Un but de l'invention est de proposer un système de coupe de tubes individuels dans un produit tubulaire formé en continu qui améliore les dispositifs et procédés connus.

Un autre but de la présente invention est de proposer un système de coupe de tubes qui est plus performant que les systèmes connus, notamment qui limite le nombre d'éléments embarqués de façon à réduire son inertie, notamment dans le sens de déplacement du produit tubulaire et à permettre malgré tout une cadence de production élevée.

Un autre but de la présente invention est de proposer un système de coupe qui puisse être facilement mis en oeuvre et adapté au diamètre du produit tubulaire et également à la longueur du tube à découper sans intervention majeure sur la machine de production.

Un autre but de la présente invention est de proposer un système de coupe qui soit capable de suivre les cadences de production des machines actuelles, à savoir des cadences élevées.

Un autre but de la présente invention est de proposer un système qui puisse facilement compenser l'usure des lames de coupe, sans nécessiter un changement de celles-ci.

Un autre but de la présente invention est de proposer un procédé de coupe de tubes individuels à partir d'un produit tubulaire continu et en mouvement ou défilement linéaire ininterrompu.

Dans un mode d'exécution, l'invention concerne un dispositif de coupe de tubes individuels à partir d'un produit tubulaire continu en mouvement de translation ininterrompu et formé par une machine de production, le dispositif comprenant au moins
un châssis fixe par rapport à la machine,
un ensemble mobile en translation par rapport au châssis et supportant une tête de coupe entrainée en translation linéaire alternative et en rotation, la tête de coupe comprenant au moins une lame de coupe montée sur un bras basculant,
un premier mécanisme comprenant au moins un premier moteur pour entraîner en translation alternative la tête de coupe,
un deuxième mécanisme comprenant au moins un deuxième moteur pour entraîner en rotation la tête de coupe,
un troisième mécanisme comprenant au moins un troisième moteur pour actionner le début et la fin de l'opération de coupe avec la lame de coupe. Dans le dispositif de coupe les mécanismes sont fixes dans la direction de défilement du produit tubulaire par rapport au châssis du dispositif de façon à
limiter le nombre et le poids des éléments embarqués et par conséquent limiter l'inertie. De préférence, au moins les moteurs des trois mécanismes sont fixes par rapport au châssis du dispositif.

Dans un mode d'exécution, les moyens d'actionnement du troisième mécanisme sont fixes dans la direction de défilement du produit tubulaire par rapport au châssis.

Dans un mode d'exécution, le bras basculant de la tête de coupe comprend au moins un axe de pivotement et un point d'actionnement; l'axe de pivotement étant entrainé en translation linéaire alternative par le premier mécanisme et en rotation par le deuxième mécanisme; le point d'actionnement étant entrainé en rotation par le troisième mécanisme.

Dans un mode d'exécution, le dispositif comprend au moins une colonne de transmission de l'entraînement reliant l'axe de pivotement et les premier et deuxième mécanismes.

Dans un mode d'exécution, un déphasage en rotation entre le deuxième mécanisme et le troisième mécanisme entraîne un mouvement de rotation du bras basculant et de la lame de coupe autour de l'axe de pivotement.

Dans un mode d'exécution, le deuxième mécanisme comprend au moins une colonne d'entraînement de la tête de coupe entraînée en rotation par un deuxième moteur, le bras basculant et la lame de coupe étant liés à la colonne d'entraînement par un axe de pivotement.

Dans un mode d'exécution, le premier mécanisme comprend un ensemble pignon-crémaillère, le pignon est entraîné par un premier moteur.

Dans un mode d'exécution, la colonne d'entraînement est entraînée en rotation par le deuxième moteur au travers d'une poulie et d'une courroie d'entraînement.

Dans un mode d'exécution, le point d'actionnement est entraîné en rotation par le troisième moteur au travers d'une poulie et d'une courroie d'entraînement.

Dans un mode d'exécution, l'invention concerne une machine de production de tubes individuels à partir d'un produit tubulaire continu, la machine comprenant au moins un dispositif tel que décrit dans la présente demande.

Dans un mode d'exécution, l'invention concerne un procédé de coupe de tubes individuels à partir d'un produit tubulaire continu en mouvement de translation ininterrompu, dans lequel
on déplace en translation un ensemble mobile supportant une tête de coupe entraînée en translation linéaire alternative et en rotation, la tête de coupe comprenant au moins une lame de coupe sur un bras basculant libre en rotation autour d'un axe de pivotement,
on entraîne en rotation un point d'actionnement,
on actionne le début et la fin de l'opération de coupe avec la lame de coupe par une déphasage en rotation de la tête de coupe et du point d'actionnement;
on ramène l'ensemble mobile à un point de départ pour un nouveau cycle de coupe.

Dans un mode d'exécution du procédé, l'entraînement en translation est réalisé par un ensemble pignon-crémaillère.

Dans un mode d'exécution du procédé, l'entraînement en rotation est réalisé par un moteur agissant sur une poulie par l'intermédiaire d'une courroie crantée.

Dans un mode d'exécution du procédé, le déphasage permet de régler le point de coupe sur la lame de coupe et de compenser l'usure de ladite lame.

Ainsi en conformité avec les principes de la présente invention, dans le procédé selon l'invention, les éléments suivants ne sont pas embarqués, c'est-à-dire qu'ils n'ont pas de mouvement linéaire alternatif selon l'axe de défilement du tube et ne sont donc pas déplacés:
-) les moyens d'entrainement rotatif;
-) les moyens d'actionnement;
-) les moyens d'entrainement linéaire.

Ces moyens d'entrainement ou d'actionnement comprennent notamment un moteur.

Par contre, les moyens de transmission embarqués possèdent une faible inertie notamment dans la direction axiale, c'est-à-dire dans le sens du mouvement linéaire alternatif. Ces moyens embarqués transmettent les mouvements d'entrainement en translation et rotation jusqu'à la tête de coupe. Ils permettent aussi la transmission du mouvement d'actionnement de la tête de coupe.

### BREVE DESCRIPTION DES DESSINS

La présente invention sera mieux comprise grâce à la description de modes d'exécution de celle-ci et des figures dans lesquelles
La figure 1 illustre un schéma de principe de l'invention;
La figure 2 illustre une vue schématique en coupe de face du système de coupe selon la présente invention.

### DESCRIPTION DETAILLEE

Le dispositif selon l'invention est formé notamment d'une partie fixe qui comprend des éléments lourds et peu pratiques à déplacer et une partie mobile légère et facile à accélérer et ralentir pour effectuer l'opération de coupe sur le produit tubulaire en production.

Le dispositif selon l'invention comprend des moyens d'entrainement en translation qui sont fixes et des moyens de transmission du mouvement de translation qui sont mobiles. Les moyens de transmission sont conçus de manière à avoir une inertie la plus faible possible.

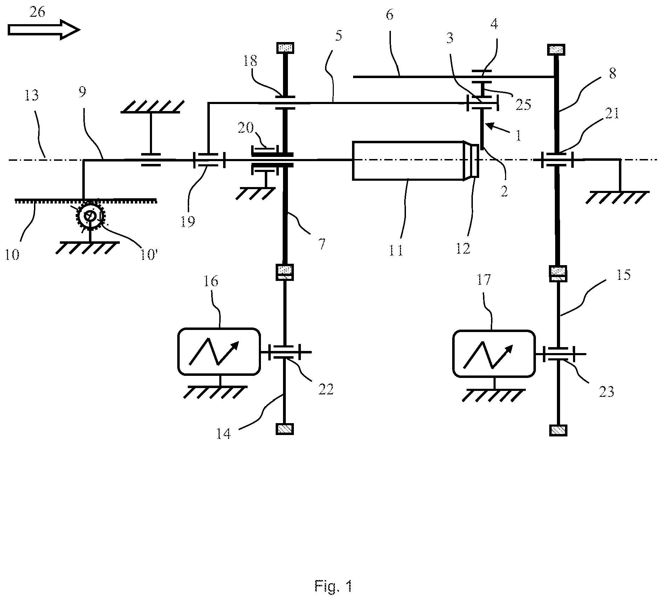

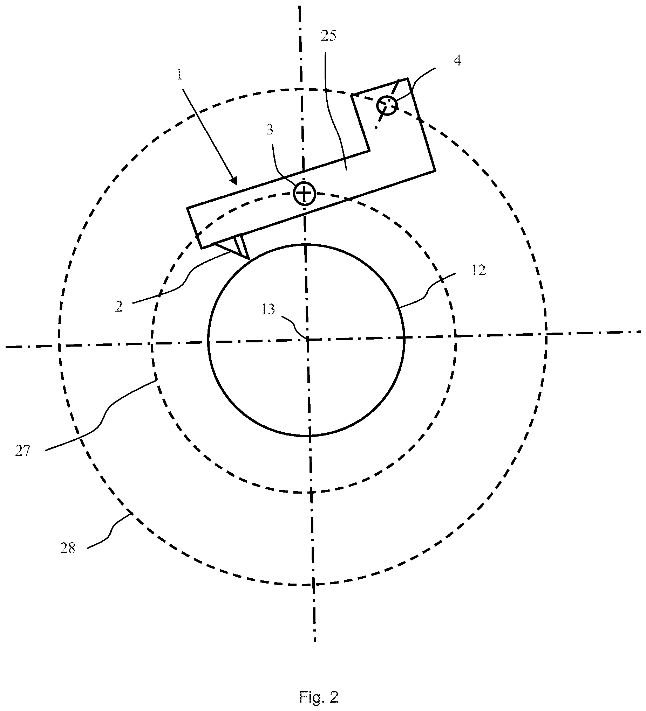

Plus spécifiquement, le dispositif selon l'invention et tel qu'illustré dans les figures 1 et 2 comprend un support de transmission 9 qui est mobile en translation par rapport à la machine de production. Cette translation est obtenue par un système de pignon 10' et crémaillère 10 par exemple, d'autres moyens équivalents étant possibles. De préférence, le pignon 10' est entraîné par un premier moteur 10" de façon directe ou indirecte, ledit moteur 10" étant fixe par rapport à la machine de production. Le mouvement de translation du support 9 est linéaire pour suivre le déplacement d'un produit tubulaire formé dans la machine à la même vitesse et permettre sa découpe rotative en tubes individuels pendant un déplacement en translation ininterrompu selon l'axe longitudinal 13 du produit tubulaire dans la direction 26. Une fois la découpe rotative terminée, les moyens de coupe sont retirés, comme il sera expliqué plus loin dans la présente description, et le support 9 est ramené à une position de départ pour effectuer un nouveau cycle de coupe de tube.

Le dispositif de coupe selon la présente invention comprend en outre, comme moyens d'entraînement, un premier mécanisme d'entraînement en rotation formé notamment d'un deuxième moteur 16, par exemple un servomoteur, monté sur la machine, d'une poulie 7, par exemple mise en rotation par une courroie 14 liée au moteur 16 ou d'autres moyens équivalents, la poulie 7 entraînant au moins une colonne de transmission de l'entrainement 5, ladite colonne 5 coulissant dans un guidage 18 de la poulie 7 ce qui permet son déplacement en translation selon l'axe 13 du produit tubulaire. Ceci permet donc de découpler le mécanisme d'entraînement 14 qui est fixé à la machine tandis que la colonne de transmission 5 entraînée en rotation se déplace avec l'ensemble mobile. On peut prévoir plusieurs colonnes de transmission 5, par exemple deux colonnes ou plus afin de stabiliser le système de coupe.

Une colonne de transmission 5 porte des moyens de coupe sous forme d'une tête de coupe 1 comprenant un bras basculant 25 portant une lame de coupe 2, le bras 25 étant monté sur la colonne 5 par un axe de pivotement 3, permettant le pivotement du bras et de la lame 2 en direction de l'axe 13 du tube ou en s'éloignant dudit axe pour réaliser l'opération de coupe des tubes individuels à partir du produit tubulaire produit en continu. Lors de la coupe, le produit tubulaire est guidé dans le corps tubulaire 11.

Le dispositif comprend, comme moyens d'entraînement, un deuxième mécanisme d'entraînement 15, défini aussi comme un mécanisme d'actionnement dans la suite, comportant un troisième moteur 17 d'actionnement, par exemple un servomoteur, monté sur la machine, une poulie d'actionnement 8, ladite poulie 8 étant entraînée en rotation par le moteur 17 par exemple au moyen d'une courroie ou d'autres moyens équivalents, ladite poulie d'actionnement 8 entraînant en rotation un point d'actionnement 4 du bras 25. Ce point d'actionnement 4 est fixé sur une tige d'actionnement 6 et est utilisé pour réaliser une rotation du bras 25 et de la lame de coupe 2 autour de son axe de pivotement 3 de la façon suivante: le point d'actionnement 4 est décalé par rapport à l'axe de pivotement 3 ce qui a pour effet qu'un mouvement relatif en rotation dudit point d'actionnement 4 par rapport à l'axe de pivotement 3 va faire tourner le bras basculant 25 autour de l'axe 4 est donc le rapprocher (ou l'éloigner) de l'axe du tube 13. Comme les deux poulies 7 et 8 ont le même axe de rotation qui est l'axe du tube 13, un décalage relatif du point d'actionnement par rapport à l'axe de pivotement 3 peut être obtenu par un déphasage relatif des poulies 7 et 8. Ainsi, ce déphasage qui est commandé au niveau des moteurs 16 et 17 permet de déplacer la lame de coupe 2 dans une position de coupe du produit tubulaire en la rapprochant de l'axe 13, ou de la retirer de la position de coupe en l'éloignant de l'axe 13 simplement en jouant sur le déphasage des poulies 7 et 8 et le basculement du bras 25 qui en découle.

La figure 2 illustre de façon schématique les moyens de coupe du produit tubulaire au niveau de la tête de coupe 1. Le bras basculant 25 est monté sur l'axe 3 de pivotement et porte à une extrémité la lame de coupe 2. L'autre extrémité du bras 25 est liée au point d'actionnement 4, et lors de la rotation du système, l'axe de pivotement 3 va suivre le cercle 27 tandis que le point de pivotement 4 va suivre le cercle 28. Comme décrit ci-dessus, un déphasage relatif du point d'actionnement 4 et de l'axe de pivotement aura pour effet une rotation du bras 25, ce qui permet, en fonction du sens du déphasage, de rapprocher la lame 2 de l'axe 13 et donc d'effectuer la coupe du tube ou de l'éloigner de l'axe.

Selon l'invention, le fonctionnement de la tête de coupe peut être résumé de la façon suivante:
-) L'axe de pivotement et le point d'actionnement sont entrainés en rotation autour de l'axe du tube 13. Ce mouvement est nécessaire pour effectuer la coupe circulaire du tube avec la lame de coupe 2.
-) L'axe de pivotement 3 et le point d'actionnement 4 sont pilotés séparément. Si leur position relative est constante, il n'y a pas de mouvement radial de la lame de coupe 2. Si leur position relative change, un mouvement radial de la lame de coupe 2 est généré qui permet ainsi la découpe circulaire d'un tube individuel pendant le déplacement en translation à la vitesse de mouvement du produit tubulaire.

Les réglages de la tête de coupe sont de préférence les suivants:
-) position radiale initiale de la lame de coupe 2 (en fonction du diamètre du tube): la position initiale est ajustée par la distance relative (à savoir un déphasage angulaire) entre le point d'actionnement 4 et l'axe de pivotement 3.
-) la profondeur de coupe est ajustée par une autre valeur de déphasage angulaire entre le point d'actionnement 4 et l'axe de pivotement 3.
-) les positions angulaires de début et fin de coupe peuvent être réglées à tout moment car la position angulaire de l'axe de pivotement 3 et celle du point d'actionnement 4 sont connues à chaque instant. Le déphasage est donc réglable en permanence. Il est donc facile d'adapter le système selon l'invention à des diamètres ou des épaisseurs de tubes différents.
-) Les colonnes de transmission de l'entrainement 5 transmettent les mouvements linéaires et de rotation à la tête de coupe.
-) L'axe d'actionnement 6 transmet le pilotage de la position relative du point d'actionnement.
-) La douille de calibration 12 maintient le tube lors de la coupe et centre le tube par rapport à l'axe théorique. La douille de calibration 12 permet de donner une référence de la profondeur de coupe (la position radiale de la lame est réglée par rapport à la douille). La douille de calibration 12 permet également d'obtenir une coupe plus franche en optimisant le jeu axial entre la douille 12 et la lame 2.

Les éléments référencés 18 à 23 sont des moyens de guidage, notamment:
18 est un palier de guidage longitudinal de la colonne 5 dans la poulie 7, pour le déplacement longitudinal de la colonne 5 pendant la coupe;
19 est un palier de guidage en rotation de la colonne 5, sur l'axe 13 du tube,
20 est le palier de guidage en rotation de la poulie 7 sur l'axe 13 du tube;
21 est le palier de guidage en rotation de la poulie 8 sur l'axe 13 du tube;
22 est le palier de guidage du mécanisme d'entraînement 14;
23 est le palier de guidage du mécanisme d'actionnement 15.

La référence 26 indique la direction de défilement du produit tubulaire.

Le procédé mis en oeuvre dans la machine et selon l'invention, rend possible la découpe de tubes individuels sans interrompre la formation du produit tubulaire dans lequel ces tubes individuels sont découpés.

Dans le procédé selon l'invention, on effectue une coupe de tubes individuels à partir d'un produit tubulaire qui a une forme continue et est en mouvement de translation ininterrompu, en mettant en oeuvre les étapes suivantes
-) on déplace en translation l'ensemble mobile.
-) on entraîne en rotation le bras basculant avec la lame de coupe autour de l'axe du produit tubulaire,
-) on entraîne en rotation le point d'actionnement,
-) on actionne le début et/ou la fin de l'opération de coupe par un déphasage en rotation de la tête de coupe et du point d'actionnement;
-) une fois la coupe terminée, on ramène l'ensemble mobile à un point de départ.

De préférence, l'entraînement en translation est réalisé par un ensemble pignon-crémaillère 10,10', le pignon étant fixé à la machine et la crémaillère à l'ensemble mobile.

Le procédé selon l'invention permet de couper un corps tubulaire individuel imprimé en référence à une marque ou un cliché en séquence répétitive selon l'axe de défilement du produit tubulaire

Le procédé permet de terminer la coupe des corps tubulaires individuels de façon très précise à une position la plus en aval selon l'axe 13. Cette invention présente l'avantage de simplifier les opérations de transfert desdits corps tubulaires sur les mécanismes ou structures placés en aval.

L'entraînement en rotation est réalisé par un moteur agissant sur une poulie par l'intermédiaire d'une courroie crantée.

Selon le procédé, le déphasage permet également de régler le point de coupe sur la lame de coupe et de compenser l'usure de ladite lame.

## Revendications

1. Dispositif de coupe de tubes individuels à partir d'un produit tubulaire continu en mouvement de translation ininterrompu et formé par une machine de production, ledit dispositif comprenant au moins
un châssis fixe par rapport à la machine,
un ensemble mobile en translation par rapport au châssis et supportant une tête de coupe (1) entrainée en translation linéaire alternative et en rotation, ladite tête de coupe comprenant au moins une lame de coupe (2) montée sur un bras basculant (25),
un premier mécanisme comprenant au moins un premier moteur (10") pour entraîner en translation alternative ladite tête de coupe,
un deuxième mécanisme comprenant au moins un deuxième moteur (16) pour entraîner en rotation ladite tête de coupe,
un troisième mécanisme comprenant au moins un troisième moteur (17) pour actionner le début et la fin de l'opération de coupe avec la lame de coupe,
le dispositif de coupe étant **caractérisé par le fait que** lesdits premier, deuxième et troisième mécanismes sont fixes dans la direction de défilement du produit tubulaire par rapport au châssis du dispositif.

2. Dispositif selon la revendication 1, dans lequel les moyens d'actionnement du troisième mécanisme (6, 8, 21, 15, 23, 17) sont fixes dans la direction de défilement du produit tubulaire par rapport au châssis.

3. Dispositif selon l'une des revendications précédentes, dans lequel le bras basculant de la tête de coupe comprend au moins un axe de pivotement (3) et un point d'actionnement (4); l'axe de pivotement étant entrainé en translation linéaire alternative par le premier mécanisme et en rotation par le deuxième mécanisme; le point d'actionnement étant entrainé en rotation par le troisième mécanisme.

4. Dispositif selon l'une des revendications précédentes comprenant au moins une colonne (5) de transmission de l'entraînement reliant l'axe de pivotement et les premier et deuxième mécanismes.

5. Dispositif selon l'une des revendications précédentes, dans lequel un déphasage en rotation entre le deuxième mécanisme et le troisième mécanisme entraîne un mouvement de rotation du bras basculant (25) et de la lame de coupe (2) autour de l'axe de pivotement (3).

6. Dispositif selon l'une des revendications précédentes, dans lequel le deuxième mécanisme comprend au moins une colonne d'entraînement (5) de la tête de coupe entraînée en rotation par un deuxième moteur (16), le bras basculant et la lame de coupe étant liés à ladite colonne d'entraînement par un axe de pivotement (3).

7. Dispositif selon l'une des revendications précédentes, dans lequel le premier mécanisme comprend un ensemble pignon-crémaillère (10,10'), ledit pignon (10') est entraîné par un premier moteur (10'").

8. Dispositif selon l'une des revendications précédentes, dans lequel ladite colonne d'entraînement (5) est entraînée en rotation par le deuxième moteur (16) au travers d'une poulie (7) et d'une courroie d'entraînement (1).

9. Dispositif selon l'une des revendications précédentes, dans lequel ledit point d'actionnement (4) est entraîné en rotation par le troisième moteur (17) au travers d'une poulie et d'une courroie d'entraînement.

10. Machine de production de tubes individuels à partir d'un produit tubulaire continu, ladite machine comprenant au moins un dispositif selon l'une des revendications précédentes.

11. Procédé de coupe de tubes individuels à partir d'un produit tubulaire continu en mouvement de translation ininterrompu, dans un dispositif selon l'une des revendications 1 à 10, dans lequel on déplace en translation un ensemble mobile supportant une tête de coupe entraînée en translation linéaire alternative et en rotation, ladite tête de coupe comprenant au moins une lame de coupe sur un bras basculant libre en rotation autour d'un axe de pivotement, ,
on entraîne en rotation un point d'actionnement,
on actionne le début et la fin de l'opération de coupe avec la lame de coupe par une déphasage en rotation de la tête de coupe et du point d'actionnement;
on ramène l'ensemble mobile à un point de départ pour un nouveau cycle de coupe.

12. Procédé selon la revendication 11, dans lequel l'entraînement en translation est réalisé par un ensemble pignon-crémaillère.

13. Procédé selon l'une des revendications 11 ou 12, dans lequel l'entraînement en rotation est réalisé par un moteur agissant sur une poulie par l'intermédiaire d'une courroie crantée.

14. Procédé selon l'une des revendications 11 à 13, dans lequel le déphasage permet de régler le point de coupe sur la lame de coupe et de compenser l'usure de ladite lame.

## Patentansprüche

1. Vorrichtung zum Schneiden einzelner Rohre aus einem kontinuierlichen Rohrprodukt, das sich in einer ununterbrochenen Translationsbewegung befindet und durch eine Fertigungsmaschine gebildet wird, wobei die Vorrichtung zumindest Folgendes umfasst:
einen in Bezug auf die Maschine feststehenden Rahmen,
eine Einheit, die in Bezug auf den Rahmen translatorisch bewegbar ist und einen Schneidkopf (1) trägt, der hin- und hergehend linear translatorisch und rotatorisch angetrieben wird, wobei der Schneidkopf mindestens eine Schneidklinge (2) umfasst, die an einem Schwenkarm (25) montiert ist,
einen ersten Mechanismus, der mindestens einen ersten Motor (10'') umfasst, um den Schneidkopf hin- und hergehend translatorisch anzutreiben,
einen zweiten Mechanismus, der mindestens einen zweiten Motor (16) umfasst, um den Schneidkopf rotatorisch anzutreiben,
einen dritten Mechanismus, der mindestens einen dritten Motor (17) umfasst, um den Beginn und das Ende eines Schneidvorgangs mit der Schneidklinge zu betätigen,
wobei die Schneidvorrichtung **dadurch gekennzeichnet ist, dass** der erste, der zweite und der dritte Mechanismus in Bezug auf den Rahmen der Vorrichtung in Laufrichtung des rohrförmigen Produkts feststehend sind.

2. Vorrichtung nach Anspruch 1, wobei die Betätigungsmittel des dritten Mechanismus (6, 8, 21, 15, 23, 17) in Bezug auf den Rahmen in Laufrichtung des rohrförmigen Produkts feststehend sind.

3. Vorrichtung nach einem der vorangehenden Ansprüche, wobei der Schwenkarm des Schneidkopfs mindestens eine Schwenkachse (3) und einen Betätigungspunkt (4) umfasst; wobei die Schwenkachse durch den ersten Mechanismus hin- und hergehend linear translatorisch und durch den zweiten Mechanismus rotatorisch angetrieben wird; wobei der Betätigungspunkt durch den dritten Mechanismus rotatorisch angetrieben wird.

4. Vorrichtung nach einem der vorangehenden Ansprüche, umfassend mindestens eine Säule (5) zur Übertragung des Antriebs, die die Schwenkachse und den ersten und den zweiten Mechanismus verbindet.

5. Vorrichtung nach einem der vorangehenden Ansprüche, wobei eine Rotationsphasenverschiebung zwischen dem zweiten Mechanismus und dem dritten Mechanismus eine rotatorische Bewegung des Schwenkarms (25) und der Schneidklinge (2) um die Schwenkachse (3) bewirkt.

6. Vorrichtung nach einem der vorangehenden Ansprüche, wobei der zweite Mechanismus mindestens eine Säule (5) für den Antrieb des Schneidkopfs umfasst, die durch einen zweiten Motor (16) rotatorisch angetrieben wird, wobei der Schwenkarm und die Schneidklinge über eine Schwenkachse (3) mit der Antriebssäule verbunden sind.

7. Vorrichtung nach einem der vorangehenden Ansprüche, wobei der erste Mechanismus eine Ritzel-Zahnstangen-Einheit (10, 10') umfasst, wobei das Ritzel (10') durch einen ersten Motor (10‴) angetrieben wird.

8. Vorrichtung nach einem der vorangehenden Ansprüche, wobei die Antriebssäule (5) durch den zweiten Motor (16) über eine Riemenscheibe (7) und einen Antriebsriemen (1) rotatorisch angetrieben wird.

9. Vorrichtung nach einem der vorangehenden Ansprüche, wobei der Betätigungspunkt (4) durch den dritten Motor (17) über eine Riemenscheibe und einen Antriebsriemen rotatorisch angetrieben wird.

10. Maschine zur Fertigung einzelner Rohre aus einem kontinuierlichen Rohrprodukt, wobei die Maschine mindestens eine Vorrichtung nach einem der vorangehenden Ansprüche umfasst.

11. Verfahren zum Schneiden einzelner Rohre aus einem kontinuierlichen Rohrprodukt, das sich in einer ununterbrochenen Translationsbewegung befindet, in einer Vorrichtung nach einem der Ansprüche 1 bis 10, wobei eine bewegliche Einheit, die einen Schneidkopf trägt, der hin- und hergehend linear translatorisch und rotatorisch angetrieben wird, translatorisch bewegt wird, wobei der Schneidkopf mindestens eine Schneidklinge an einem Schwenkarm umfasst, der um eine Schwenkachse rotatorisch frei bewegbar ist,
ein Betätigungspunkt rotatorisch angetrieben wird,
der Beginn und das Ende des Schneidvorgangs mit der Schneidklinge durch eine Rotationsphasenverschiebung des Schneidkopfs und des Betätigungspunkts betätigt wird; die bewegliche Einheit für einen neuen Schneidzyklus an einen Ausgangspunkt zurückgeführt wird.

12. Verfahren nach Anspruch 11, wobei der translatorische Antrieb über eine Ritzel-Zahnstangen-Einheit erfolgt.

13. Verfahren nach einem der Ansprüche 11 oder 12, wobei der rotatorische Antrieb durch einen Motor erfolgt, der über einen Zahnriemen auf eine Riemenscheibe wirkt.

14. Verfahren nach einem der Ansprüche 11 bis 13, wobei die Phasenverschiebung es ermöglicht, den Schneidpunkt an der Schneidklinge einzustellen und den Verschleiß der Klinge auszugleichen.

## Claims

1. Device for cutting individual tubes from a continuous tubular product in uninterrupted translational movement and formed by a production machine, said device comprising at least
a chassis that is fixed with respect to the machine,
an assembly that is translationally mobile with respect to the chassis and supports a cutting head (1) driven in reciprocating linear translational movement and in rotational movement, said cutting head comprising at least one cutting blade (2) mounted on a rocker arm (25), a first mechanism comprising at least a first motor (10ʺ) for driving the reciprocating translational movement of said cutting head,
a second mechanism comprising at least a second motor (16) for driving the rotational movement of said cutting head,
a third mechanism comprising at least a third motor (17) for actuating the start and end of the cutting operation with the cutting blade,
the cutting device being **characterized in that** said first, second and third mechanisms are fixed in the direction of travel of the tubular product with respect to the chassis of the device.

2. Device according to Claim 1, in which the actuating means actuating the third mechanism (6, 8, 21, 15, 23, 17) are fixed in the direction of travel of the tubular product with respect to the chassis.

3. Device according to one of the preceding claims, in which the rocker arm of the cutting head comprises at least one pivot axle (3) and an actuating point (4); the pivot axle being driven in reciprocating linear translational movement by the first mechanism and in rotational movement by the second mechanism; the actuating point being driven in rotational movement by the third mechanism.

4. Device according to one of the preceding claims, comprising at least one drive-transmitting column (5) connecting the pivot axle and the first and second mechanisms.

5. Device according to one of the preceding claims, in which a rotational phase shift between the second mechanism and the third mechanism drives a rotational movement of the rocker arm (25) and of the cutting blade (2) about the pivot axle (3).

6. Device according to one of the preceding claims, in which the second mechanism comprises at least one cutting-head drive column (5) driven in rotational movement by a second motor (16), the rocker arm and the cutting blade being connected to said drive column by a pivot axle (3).

7. Device according to one of the preceding claims, in which the first mechanism comprises a rack-pinion assembly (10, 10'), said pinion (10') being driven by a first motor (10‴).

8. Device according to one of the preceding claims, in which said drive column (5) is driven in rotational movement by the second motor (16) via a pulley (7) and a drive belt (1).

9. Device according to one of the preceding claims, in which said actuating point (4) is driven in rotational movement by the third motor (17) via a pulley and a drive belt.

10. Machine for producing individual tubes from a continuous tubular product, said machine comprising at least one device according to one of the preceding claims.

11. Method for cutting individual tubes from a continuous tubular product in uninterrupted translational movement, in a device according to one of Claims 1 to 10, in which
a mobile assembly supporting a cutting head driven in reciprocating linear translational movement and in rotational movement is moved, said cutting head comprising at least one cutting blade on a rocker arm free to rotate about a pivot axle,
an actuating point is driven in rotational movement, the start and end of the cutting operation with the cutting blade is actuated by a rotational phase shift of the cutting head and of the actuating point,
the mobile assembly is returned to a starting point for a further cutting cycle.

12. Method according to Claim 11, in which the translational drive is achieved by a rack-pinion assembly.

13. Method according to one of Claims 11 and 12, in which the rotational drive is achieved by a motor acting on a pulley via a toothed belt.

14. Method according to one of Claims 11 to 13, in which the phase shift makes it possible to alter the cutting point on the cutting blade and compensate for the wearing of said blade.
